# EUROPÄISCHE PATENTSCHRIFT

(11) **EP 4 166 355 B1**
(45) Veröffentlichungstag und Bekanntmachung des Hinweises auf die Patenterteilung: **26.06.2024**
(21) Anmeldenummer: 22191597.8
(22) Anmeldetag: 23.08.2022
(51) Int. Cl.: B60C 11/03, B60C 11/12, B60C 11/13

(54) **FAHRZEUGLUFTREIFEN**
PNEUMATIC TYRE FOR VEHICLES
BANDAGE PNEUMATIQUE POUR VÉHICULE

(30) Priorität: 15.10.2021 DE 102021211651
(43) Veröffentlichungstag der Anmeldung: 19.04.2023
(73) Patentinhaber: Continental Reifen Deutschland GmbH, 30175 Hannover (DE)
(72) Erfinder: Seng, Matthias, 30165 Hannover (DE); Brockmann, Jürgen, 30165 Hannover (DE); Heinhaupt, Torsten, 30165 Hannover (DE); Fuchs, Artur, 30165 Hannover (DE); Bauer, Claudia, 30165 Hannover (DE); Vennebörger, Martin, 30165 Hannover (DE)
(74) Vertreter: Continental Corporation

(56) Entgegenhaltungen:
- DE-A1-102010 006 051
- DE-A1-102015 224 293
- US-A1- 2009 294 003
- US-A1- 2014 360 641

## Beschreibung

Die Erfindung betrifft einen Fahrzeugluftreifen, insbesondere für den Einsatz unter winterlichen Fahrbedingungen, mit einem Laufstreifen mit Profilpositiven, wie Profilblöcke oder Profilrippen, und mit Rillen, wie Umfangsrillen, Querrillen oder Schrägrillen, welche von einem Rillengrund und von Rillenflanken an den Profilpositiven begrenzt sind, wobei Profilpositive vorhanden sind, welche jeweils mit einer Anzahl von parallel zueinander verlaufenden Einschnitten versehen sind, die an einer Rillenflanke enden, auf welcher schräg über die Rillenflanke, insbesondere geradlinig, bevorzugt parallel zueinander und unter einem spitzen Winkel von 20° bis 40° zur Laufstreifenperipherie verlaufende Mikrorillen ausgebildet sind, welche eine Tiefe von 0,20 mm bis 0,50 mm und an der Rillenflanke eine Breite aufweisen, die zumindest ihrer Tiefe entspricht und welche beim radial inneren Ende der jeweiligen Rillenflanke enden.

Ein derartiger Fahrzeugluftreifen ist aus der DE 10 2015 224 293 A1 bekannt. Die an den Rillenflanken ausgebildeten Mikrorillen sind in der Lage, beim Fahren auf mit Schnee bedeckten Fahrbahnen Schnee aufzunehmen und können daher die beim Durchrutschen von Schnee durch die Rillen hindurch entstehenden Scherkräfte auf die Rillenflanken übertragen. Diese Kräfte verformen das betreffende Profilpositiv derart, dass sich die im Profil ausgebildeten und an den Rillenflanken mündenden Einschnitte etwas öffnen. Dadurch kann sich auch Schnee in den Einschnitten ansammeln und die Schnee-Schnee-Reibung und damit die Traktion auf Schnee werden erhöht.

Der Erfindung liegt die Aufgabe zugrunde, bei einem Fahrzeugluftreifen der eingangs genannten Art eine größere Öffnung der Einschnitte an den Rillenflanken zu bewirken und dadurch für eine weitere Verbesserung der Schnee-Schnee-Reibung zu sorgen.

Gelöst wird die gestellte Aufgabe erfindungsgemäß dadurch, dass an radial innere Enden von Mikrorillen unter einem stumpfen Winkel zu diesen, parallel zum Rillengrund oder unter einem spitzen Winkel von bis zu 10° weg vom Rillengrund verlaufende, langgestreckte Vertiefungen anschließen, die an ihrer tiefsten Stelle, im rechten Winkel zur Rillenflanke ermittelt, eine Tiefe von 0,30 mm bis 2,00 mm aufweisen und deren Breite an ihrer breitesten Stelle 1,00 mm bis 3,00 mm beträgt und welche in einem Abstand von mindestens 1,00 mm vor einer benachbarten Mikrorille oder einer das Profilpositiv begrenzenden Rille enden.

Gemäß der Erfindung schließen an Mikrorillen knapp oberhalb des Rillengrundes und im Wesentlichen parallel zum Rillengrund verlaufend, langgestreckte Vertiefungen an, die in Draufsicht auf die Rillenflanke an ihrer breitesten Stelle breiter sind als die jeweilige Mikrorille. Diese Maßnahmen ermöglichen es, dass beim Fahren auf Schnee mehr Schnee in die Mikrorillen hineingepresst wird, die Schnee-/Rillenflankenreibung nochmals erhöht wird, die Einschnitte besser geöffnet werden und mehr Schnee zur Erhöhung der Schnee-Schnee-Reibung aufnehmen können.

Eine besonders deutliche Verbesserung der Schneegriffeigenschaften lassen sich mit langgestreckten Vertiefungen erzielen, deren Breite an ihrer breitesten Stelle 1,50 mm bis 2,00 mm und deren Tiefe an ihren tiefsten Stellen 0,50 mm bis 1,50 mm beträgt.

Die Vertiefungen sind bevorzugt in Draufsicht langgestreckt oval, langgestreckt linsenförmig, schlitzförmig oder derart langgestreckt gestaltet, dass ihre Breite, beginnend bei den Mikrorillen kontinuierlich zunimmt. Besonders vorteilhaft für eine optimale Schnee-Schnee-Reibung sind dabei Vertiefungen, die in ihrem Verlauf breiter und wieder schmäler werden, wie die erwähnten in Draufsicht ovalen Vertiefungen, oder solche, die über ihren Verlauf bis zu ihren Enden kontinuierlich breiter werden.

Die Vertiefungen können an den Mikrorillen über einen "Knick" oder auch über Übergangsrundungen anschließen.

Besonders vorteilhaft sind ferner Ausgestaltungen der Vertiefungen mit Erstreckungslängen von 5,00 mm bis 20,00 mm, vorzugsweise von bis zu 15,00 mm. Besonders vorteilhaft ist es, wenn der vorhandene Abstand zu benachbarten Mikrorillen oder zu in den Profilblock einmündenden Querrillen möglichst optimal ausgenützt wird.

Bezüglich der Position der Vertiefungen an den Rillenflanken ist es besonders günstig, wenn die zur Laufstreifenperipherienähe näher befindliche Begrenzungskante der Vertiefungen, in radialer Richtung betrachtet, von der tiefsten Stelle des Rillengrundes einen Abstand von 2,00 mm bis 4,00 mm, insbesondere bis zu 3,00 mm, aufweist. Die Vertiefungen behalten daher über den Laufstreifenabrieb ihre vorteilhafte Wirkung auf schneeiger Fahrbahn.

Besonders gut wird Schnee in Vertiefungen eingepresst, welche im Querschnitt gerundet, insbesondere halbkreisförmig oder halbkreisähnlich, gerundet sind oder in Vertiefungen, welche im Querschnitt viertelkreisähnlich oder viertelkreisförmig sind, wobei ihre Rundung unmittelbar an eine Übergangsrundung zum Rillengrund anschließt.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Draufsicht auf die eine Hälfte eines Laufstreifens eines Fahrzeugluftreifens,
Fig. 2 eine Ansicht auf Rillenflanken von Profilblöcken, die eine Rille begrenzen, gemäß der Linie II-II der Fig. 1,
Fig. 3 einen Schnitt entlang der Linie III-III der Fig. 1 in vergrößerter Darstellung und
Fig. 4. in einem zu Fig. 3 analogen Schnitt eine weitere Ausführungsform der Erfindung.

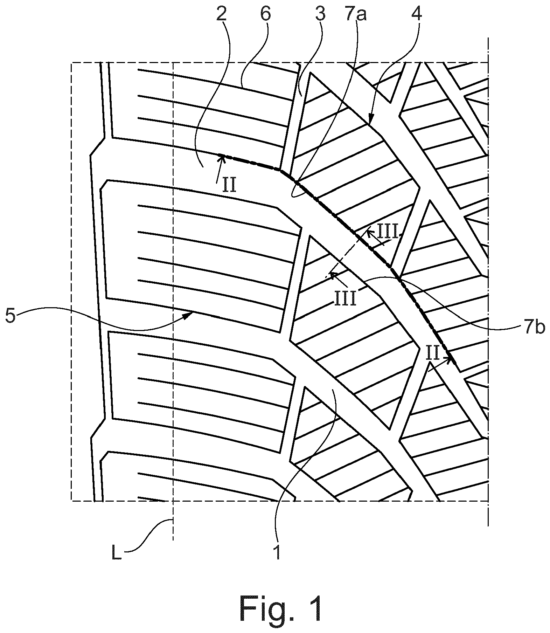

Fig. 1 zeigt eine Draufsicht auf eine Teilabwicklung der einen Hälfte eines Laufstreifens eines Fahrzeugluftreifens für Personenkraftwagen, SUVs, Vans oder Light Trucks. Ein Fahrzeugluftreifen mit einem derartigen Laufstreifen ist vor allem für den Einsatz unter winterlichen Fahrbedingungen, insbesondere auf Schnee, geeignet und vorgesehen. Die Linie L kennzeichnet den einen seitlichen Rand des bodenberührenden Teils des Laufstreifens, welcher dem statisch ermittelten Footprint gemäß E.T.R.T.O.-Standards (Last bei 70 % der maximalen Tragfähigkeit bei einem Innendruck von 85 % nach E.T.R.T.O.-Norm) in der zum Anmeldezeitpunkt geltenden Fassung entspricht.

Die in Fig. 1 gezeigte beispielhafte Profilierung des Laufstreifens weist Schrägrillen 1 auf, die laufstreifenschulterseitig in Querrillen 2 übergehen. Die Schrägrillen 1 verlaufen unter einem Winkel von 45° bis 60°, die schulterseitigen Querrillen 2 unter einem Winkel von 60° bis 90° zur Umfangsrichtung. Paare von Umfangsrillen 3, die zur Umfangsrichtung unter einem Winkel von bis zu 20° verlaufen und in Umfangsrichtung aufeinanderfolgende Schrägrillen 1 miteinander verbinden, bewirken eine Gliederung des Laufstreifens in mittlere Profilblöcke 4 und in schulterseitige Profilblöcke 5. Beim gezeigten Ausführungsbeispiel sind die Schrägrillen 1 die Hauptrillen des Laufstreifens und gehören somit zu jenen Rillen, die bis auf die vorgesehene Profiltiefe ausgeführt sind, die bei Reifen für Personenkraftwagen üblicherweise zwischen 6,50 mm und 9,00 mm beträgt. Darüber hinaus können auch die Querrillen 2 und die Umfangsrillen 3 zumindest abschnittsweise bis in die vorgesehen Profiltiefe reichen.

Sowohl die mittleren Profilblöcke 4 als auch die schulterseitigen Profilblöcke 5 sind jeweils mit einer Vielzahl von jeweils parallel zueinander verlaufenden Einschnitten 6 versehen, insbesondere durchquert. Bei der gezeigten Ausführung und wie es bei Laufstreifen für Winterreifen üblich ist, erstrecken sich die Einschnitte 6 im Wesentlichen in axialer Richtung bzw. unter einem Winkel von bis zu 30° zur axialen Richtung. Die Einschnitte 6 sind als in Draufsicht gerade verlaufende Einschnitte dargestellt, können jedoch auch in Wellen-, Zickzack- oder sonstiger Form verlaufen. Die Einschnitte 6 weisen ferner eine für Einschnitte übliche Breite in der Größenordnung von 0,40 mm bis 0,80 mm auf, ihre Tiefe ist üblicherweise etwas geringer als die Profiltiefe und kann auch abschnittsweise variieren.

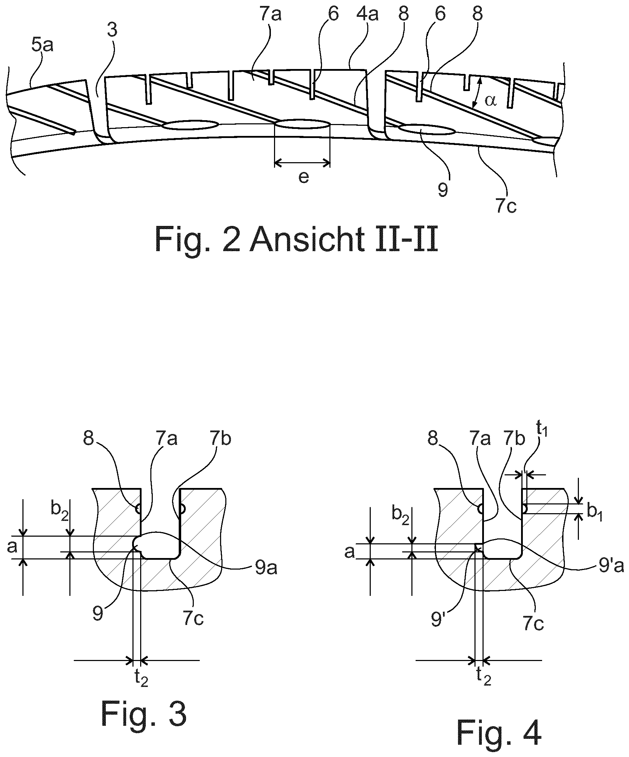

Die Schrägrillen 1 sind, wie es beispielsweise die Schnittdarstellungen in Fig. 3 und Fig. 4 zeigt, von gegenüberliegenden ebenen Rillenflanken 7a, 7b der mittleren und der schulterseitigen Profilblöcke 4, 5 und einem Rillengrund 7c begrenzt, Übergangsrundungen verbinden den Rillengrund 7c mit den Rillenflanken 7a, 7b.

Die Rillenflanken 7a, 7b verlaufen bei den gezeigten Ausführungsbeispielen in radialer Richtung, sodass, wie es Fig. 3 und Fig. 4 zeigen, die Schrägrillen 1 einen U-förmigen Querschnitt aufweisen. Alternativ verlaufen die Rillenflanken 7a, 7b einem spitzen Winkel von bis zu 10° zur radialen Richtung, derart, dass die Breite der Schrägrillen 1 vom Rillengrund 7c bis zur Laufstreifenperipherie kontinuierlich zunimmt.

Fig. 2 zeigt eine Sicht auf drei entlang einer Schrägrille 1 aufeinanderfolgenden Rillenflanken 7a, wobei die mittlere Rillenflanke 7a komplett und die beiden seitlich anschließenden jeweils zum Teil dargestellt sind. Fig. 2 zeigt ferner die Einmündungsstellen der beiden einmündenden Umfangsrillen 3 sowie der an den Rillenflanken 7a der beiden mittleren Profilblöcke 4 einmündenden Einschnitte 6. Die gegenüberliegenden Rillenflanken 7b sind bevorzugt analog gestaltet.

Wie insbesondere Fig. 2 zeigt sind an den Blockflankten 7a, bevorzugt in analoger Weise auch an den Rillenflanken 7b, Mikrorillen 8 ausgebildet. Die Mikrorillen 8 verlaufen schräg über die Rillenflanken 7a sowie bevorzugt geradlinig oder leicht bogenförmig und beginnend bei der Laufstreifenperipherie bis zum Beginn der Übergangsrundungen zum Rillengrund 7c. Mit den an der Laufstreifenperipherie vorliegenden Blockkanten 4a der mittleren Profilblöcke 4 und den Blockkanten 5a der schulterseitigen Profilblöcke 5 schließen die Mikrorillen 8 einem spitzen Winkel α von 20° bis 40° ein. Bevorzugt verlaufen die Mikrorillen 8 parallel zueinander und unter gegenseitigen Normalabständen von 3,00 mm bis 10,00 mm, vorzugsweise bis zu 7,00 mm, wobei der Normalabstand sämtlicher vorgesehener Mikrorillen 8 bevorzugt gleich groß ist. Einzelne Mikrorillen 8 sind ihrem Verlauf durch Umfangsrillen 3 unterbrochen, setzen sich daher an der Rillenflanke 7a des benachbarten Profilblockes 4, 5 fort. Jede Mikrorille 8 kreuzt ferner zumindest einen Einschnitt 6 an seiner Mündungsstelle an einer Rillenflanke 7a.

Die Mikrorillen 8 sind bevorzugt gerundete, insbesondere halbkreisförmig gerundete Vertiefungen an den Rillenflanken 7a, 7b, weisen eine im rechten Winkel gegenüber der jeweiligen Rillenflanke 7a, 7b ermittelte größte Tiefe t₁ von 0,20 mm bis 0,50 mm und an den Rillenflanken 7a, 7b eine Breite b₁ auf, die zumindest ihrer Tiefe t₁ und bis zum Zweifachen der Tiefe t₁, entspricht.

Wie bereits erwähnt enden die Mikrorillen 8 beim Beginn der Übergangsrundungen zum Rillengrund 7c. An diese Enden einiger oder sämtlicher Mikrorillen 8 schließen unter einem stumpfen Winkel und vorzugsweise parallel zum Rillengrund 7c verlaufend langgestreckte, in Draufsicht insbesondere langgestreckt oval, langgestreckt linsenförmig oder schlitzförmig ausgebildete Vertiefungen 9 (Fig. 3) bzw. 9' (Fig. 4) an. Die Vertiefungen 9, 9' besitzen, parallel zum Rillengrund 7c betrachtet, eine Erstreckungslänge e von 5,00 mm bis 20,00 mm, insbesondere bis 15.00 mm, und sind bevorzugt derart ausgeführt, dass sie auf den Rillenflanken 7a, 7b in einem Abstand von mindestens 1,00 mm vor der nächsten Mikrorillen 8 oder einer der Umfangsrillen 3 enden. Bei einer alternativen Ausführung nimmt die Breite b₂ der Vertiefungen 9, 9' beginnend bei ihren Anschlussstellen an die Mikrorillen 8 bis zu ihren freien Enden kontinuierlich zu. Bei einer weiteren alternativen Ausführung verlaufen die Vertiefungen 9, 9' unter einem spitzen Winkel von bis zu 10° zum Rillengrund 7c und in Richtung Laufstreifenperipherie.

Fig. 3 zeigt eine bevorzugte Ausführung der Vertiefung 9. Die Vertiefung 9 ist im Querschnitt gerundet, insbesondere halbkreisförmig oder höchstens halbkreisförmig, und weist an ihrer tiefsten Stelle, im rechten Winkel zur Rillenflanke 7a, 7b ermittelt, eine Tiefe t₂ von 0,30 mm bis 2,00 mm auf, insbesondere 0,50 mm bis 1,50 mm, ihre Breite b₂ an ihrer breitesten Stelle beträgt 1,00 mm bis 3,00 mm, insbesondere bis 1,50 mm bis 2,00 mm. Die zur Laufstreifenperipherie näher befindliche Begrenzungskante 9a der Vertiefung 9 befindet sich, in radialer Richtung ermittelt, gegenüber der tiefsten Stelle des Rillengrundes 7c in einem Abstand a von 2,00 mm bis 4,00 mm, insbesondere bis 3,00 mm.

Fig. 4 zeigt eine bevorzugte Ausführung der Vertiefung 9`. Bei diesem Ausführungsbeispiel weist die Vertiefung 9' einen viertelkreisförmigen oder viertelkreisähnlichen Querschnitt auf, wobei der Viertelkreis bzw. die Rundung unmittelbar an die Übergangsrundung zum Rillengrund 7c anschließt. Die größte Breite b₂, die größte Tiefe t₂ der Vertiefung 9` sowie der Abstand a zur Begrenzungskante 9'a bewegen sich im Bereich der erwähnten Dimensionen für die Breite b₂, die Tiefe t₂ und den Abstand a.

Bei weiteren, nicht gezeigten Ausführungsvarianten sind die Vertiefungen im Querschnitt V-förmig gestaltet oder weisen einen sonstigen beliebigen Querschnitt mit den erwähnten Breiten und Tiefen auf.

### Bezugszeichenliste

- 1: Schrägrille
- 2: Querrille
- 3: Umfangsrille
- 4: mittlerer Profilblock
- 5: schulterseitiger Profilblock
- 4a, 5a: Blockkante
- 6: Einschnitt
- 7a, 7b: Rillenflanke
- 7c: Rillengrund
- 8: Mikrorille
- 9, 9': Vertiefung
- 9a, 9'a: Begrenzungskante
- b₁, b₂: Breite
- t₁, t₂: Tiefe
- e: Erstreckungslänge

## Patentansprüche

1. Fahrzeugluftreifen, insbesondere für den Einsatz unter winterlichen Fahrbedingungen, mit einem Laufstreifen mit Profilpositiven, wie Profilblöcke (4, 5) oder Profilrippen, und mit Rillen (1, 3), wie Umfangsrillen, Querrillen oder Schrägrillen, welche von einem Rillengrund (7c) und von Rillenflanken (7a, 7b) an den Profilpositiven begrenzt sind, wobei Profilpositive vorhanden sind, welche jeweils mit einer Anzahl von parallel zueinander verlaufenden Einschnitten (6) versehen sind, die an einer Rillenflanke (7a, 7b) enden, auf welcher schräg über die Rillenflanke (7a, 7b), insbesondere geradlinig, bevorzugt parallel zueinander und unter einem spitzen Winkel (α) von 20° bis 40° zur Laufstreifenperipherie verlaufende Mikrorillen (8) ausgebildet sind, welche eine Tiefe (t₁) von 0,20 mm bis 0,50 mm und an der Rillenflanke eine Breite(b₁) aufweisen, die zumindest ihrer Tiefe entspricht und welche beim radial inneren Ende der jeweiligen Rillenflanke (7a, 7b) enden,
**dadurch gekennzeichnet,**
**dass** an radial innere Enden von Mikrorillen (8) unter einem stumpfen Winkel zu diesen, parallel zum Rillengrund (7c) oder unter einem spitzen Winkel von bis zu 10° weg vom Rillengrund (7c) verlaufende, langgestreckte Vertiefungen (9, 9`) anschließen, die an ihrer tiefsten Stelle, im rechten Winkel zur Rillenflanke (7a, 7b) ermittelt, eine Tiefe (t₂) von 0,30 mm bis 2,00 mm aufweisen und deren Breite (b₂) an ihrer breitesten Stelle 1,00 mm bis 3,00 mm, beträgt und welche in einem Abstand von mindestens 1,00 mm vor einer benachbarten Mikrorille (8) oder einer das Profilpositiv begrenzenden Rille (3) enden.

2. Fahrzeugluftreifen nach Anspruch 1, **dadurch gekennzeichnet, dass** die Breite (b₂) der Vertiefungen (9, 9') an ihrer breitesten Stelle 1,50 mm bis 2,00 mm, beträgt.

3. Fahrzeugluftreifen nach Anspruch 1, **dadurch gekennzeichnet, dass** die Tiefe (t₂) der Vertiefungen (9, 9') an ihrer tiefsten Stelle 0,50 mm bis 1,50 mm beträgt.

4. Fahrzeugluftreifen nach einem der Ansprüche 1 bis 3, **dadurch gekennzeichnet, dass** die Vertiefungen (9, 9') in Draufsicht langgestreckt oval, langgestreckt linsenförmig oder schlitzförmig ausgebildet sind.

5. Fahrzeugluftreifen nach einem der Ansprüche 1 bis 3, **dadurch gekennzeichnet, dass** die Vertiefungen (9, 9') in Draufsicht derart langestreckt sind, dass ihre Breite, beginnend bei den Mikrorillen (8), kontinuierlich zunimmt.

6. Fahrzeugluftreifen nach einem der Ansprüche 1 bis 5, **dadurch gekennzeichnet, dass** die Breite der Vertiefungen (9, 9') bei ihrem Beginn bei den Mikrorillen (8) der Breite der Mikrorillen (8) an dieser Stelle entspricht.

7. Fahrzeugluftreifen nach einem der Ansprüche 1 bis 6, **dadurch gekennzeichnet, dass** die Vertiefungen (9, 9`) über Übergangsrundungen an die Mikrorillen (8) anschließen.

8. Fahrzeugluftreifen nach einem der Ansprüche 1 bis 7, **dadurch gekennzeichnet, dass** die Vertiefungen (9, 9`) eine Erstreckungslänge (e) von 5,00 mm bis 20,00 mm, vorzugsweise von bis zu 15,00 mm, aufweisen.

9. Fahrzeugluftreifen nach einem der Ansprüche 1 bis 8, **dadurch gekennzeichnet, dass** die Vertiefungen (9, 9') eine zur Laufstreifenperipherie näher befindliche Begrenzungskante (9a, 9'a) aufweisen, welche, in radialer Richtung betrachtet, zur tiefsten Stelle des Rillengrundes (7c) einen Abstand (a) von 2,00 mm bis 4,00 mm, insbesondere bis 3,00 mm, aufweist.

10. Fahrzeugluftreifen nach einem der Ansprüche 1 bis 9, **dadurch gekennzeichnet, dass** die Vertiefungen (9) im Querschnitt gerundet sind.

11. Fahrzeugluftreifen nach Anspruch 10, **dadurch gekennzeichnet, dass** die Vertiefungen (9) im Querschnitt halbkreisförmig oder halbkreisähnlich gerundet sind.

12. Fahrzeugluftreifen nach einem der Ansprüche 1 bis 10, **dadurch gekennzeichnet, dass** die Vertiefungen (9`) im Querschnitt viertelkreisähnlich oder viertelkreisförmig sind, wobei ihre Rundung unmittelbar an eine Übergangsrundung zum Rillengrund (7c) anschließt.

## Claims

1. Pneumatic vehicle tyre, in particular for use in wintry driving conditions, having a tread with profile positives, such as profile blocks (4, 5) or profile ribs, and having grooves (1, 3), such as circumferential grooves, transverse grooves or oblique grooves, which are delimited by a groove base (7c) and by groove flanks (7a, 7b) on the profile positives, wherein present are profile positives which are in each case provided with a number of sipes (6) which run so as to be mutually parallel and terminate at a groove flank (7a, 7b) on which are configured micro-grooves (8) which run obliquely across the groove flank (7a, 7b), in particular so as to be rectilinear, preferably mutually parallel, and at an acute angle (α) of 20° to 40° in relation to the tread periphery, and which have a depth (t₁) of 0.20 mm to 0,50 mm, and on the groove flank have a width (b₁) that corresponds at least to their depth, and which terminate at the radially inner end of the respective groove flank (7a, 7b),
**characterized in that**
radially inner ends of micro-grooves (8) are adjoined by elongate depressions (9, 9`) which run at an obtuse angle in relation to the latter and parallel to the groove base (7c) or away from the groove base (7c) at an acute angle of up to 10°, and at their deepest point, determined at a right angle in relation to the groove flank (7a, 7b), have a depth (t₂) of 0.30 mm to 2.00 mm, and the width (b₂) thereof at their widest point is 1.00 mm to 3.00 mm, and which terminate at a spacing of at least 1.00 mm in front of an adjacent micro-groove (8) or a groove (3) delimiting the profile positive.

2. Pneumatic vehicle tyre according to Claim 1, **characterized in that** the width (b₂) of the depressions (9, 9`) at their widest point is 1.50 mm to 2.00 mm.

3. Pneumatic vehicle tyre according to Claim 1, **characterized in that** the depth (t₂) of the depressions (9, 9`) at their deepest point is 0.50 mm to 1.50 mm.

4. Pneumatic vehicle tyre according to one of Claims 1 to 3, **characterized in that** the depressions (9, 9`), when viewed from above, are designed to be elongate oval, elongate lenticular, or slot-shaped.

5. Pneumatic vehicle tyre according to one of Claims 1 to 3, **characterized in that** the depressions (9, 9`), when viewed from above, are elongate in such a manner that their width, beginning at the micro-grooves (8), continuously increases.

6. Pneumatic vehicle tyre according to one of Claims 1 to 5, **characterized in that** the width of the depressions (9, 9`), at their beginning at the micro-grooves (8), corresponds to the width of the micro-groves (8) at this point.

7. Pneumatic vehicle tyre according to one of Claims 1 to 6, **characterized in that** the depressions (9, 9`) adjoin the micro-grooves (8) via transition radii.

8. Pneumatic vehicle tyre according to one of Claims 1 to 7, **characterized in that** the depressions (9, 9`) have a length of extent (e) of 5.00 mm to 20.00 mm, preferably of up to 15.00 mm.

9. Pneumatic vehicle tyre according to one of Claims 1 to 8, **characterized in that** the depressions (9, 9`) have a delimitation edge (9a, 9'a) which is located closer to the tread periphery and, when viewed in the radial direction, has a spacing (a) of 2.00 mm to 4.00 mm, in particular up to 3.00 mm, from the deepest point of the groove base (7c).

10. Pneumatic vehicle tyre according to one of Claims 1 to 9, **characterized in that** the depressions (9) are radiussed in the cross section.

11. Pneumatic vehicle tyre according to Claim 10, **characterized in that** the depressions (9) are radiussed so as to be semi-circular or semi-circular-like in the cross section.

12. Pneumatic vehicle tyre according to one of Claims 1 to 10, **characterized in that** the depressions (9`) are quadrant-like or quadrant-shaped in the cross section, wherein their radius adjoins directly a transition radius towards the groove base (7c).

## Revendications

1. Pneumatique de véhicule, notamment pour l'utilisation dans des conditions de conduite hivernales, avec une bande de roulement avec des éléments positifs de profil, tels que des blocs de profil (4, 5) ou des nervures de profil, et avec des rainures (1, 3), telles que des rainures circonférentielles, des rainures transversales ou des rainures obliques, qui sont délimitées par un fond de rainure (7c) et par des flancs de rainure (7a, 7b) sur les éléments positifs de profil, des éléments positifs de profil étant présents, lesquels sont respectivement pourvus d'un nombre d'entailles (6) s'étendant parallèlement les unes aux autres, qui se terminent sur un flanc de rainure (7a, 7b) sur lequel sont réalisées des micro-rainures (8) s'étendant obliquement sur le flanc de rainure (7a, 7b), notamment de manière rectiligne, de préférence parallèlement les unes aux autres et selon un angle aigu (α) de 20° à 40° par rapport à la périphérie de la bande de roulement, qui présentent une profondeur (t₁) de 0,20 mm à 0,50 mm et, sur le flanc de la rainure, une largeur (b₁) qui correspond au moins à leur profondeur et qui se terminent à l'extrémité radialement intérieure du flanc de rainure respectif (7a, 7b), **caractérisé en ce**
**qu'**aux extrémités radialement intérieures de micro-rainures (8) se raccordent, selon un angle obtus par rapport à celles-ci, parallèlement au fond de rainure (7c) ou selon un angle aigu allant jusqu'à 10° en s'éloignant du fond de rainure (7c), des creux allongés (9, 9') qui, à leur endroit le plus profond, déterminé à angle droit par rapport au flanc de rainure (7a, 7b), présentent une profondeur (t₂) de 0,30 mm à 2,00 mm et leur largeur (b₂) à leur point le plus large est de 1,00 mm à 3,00 mm, et qui se terminent à une distance d'au moins 1,00 mm d'une micro-rainure (8) voisine ou d'une rainure (3) délimitant l'élément positif de profil.

2. Pneumatique de véhicule selon la revendication 1, **caractérisé en ce que** la largeur (b₂) des creux (9, 9') à leur endroit le plus large est de 1,50 mm à 2,00 mm.

3. Pneumatique de véhicule selon la revendication 1, **caractérisé en ce que** la profondeur (t₂) des creux (9, 9') à leur endroit le plus profond est de 0,50 mm à 1,50 mm.

4. Pneumatique de véhicule selon l'une quelconque des revendications 1 à 3, **caractérisé en ce que** les creux (9, 9') sont réalisés sous forme ovale allongée, lenticulaire allongée ou en forme de fente en vue de dessus.

5. Pneumatique de véhicule selon l'une quelconque des revendications 1 à 3, **caractérisé en ce que** les creux (9, 9') sont allongés en vue de dessus de telle sorte que leur largeur augmente de manière continue en commençant au niveau des micro-rainures (8).

6. Pneumatique de véhicule selon l'une quelconque des revendications 1 à 5, **caractérisé en ce que** la largeur des creux (9, 9') à leur début au niveau des micro-rainures (8) correspond à la largeur des micro-rainures (8) à cet endroit.

7. Pneumatique de véhicule selon l'une quelconque des revendications 1 à 6, **caractérisé en ce que** les creux (9, 9') se raccordent aux micro-rainures (8) par l'intermédiaire d'arrondis de transition.

8. Pneumatique de véhicule selon l'une quelconque des revendications 1 à 7, **caractérisé en ce que** les creux (9, 9') présentent une longueur d'extension (e) de 5,00 mm à 20,00 mm, de préférence jusqu'à 15,00 mm.

9. Pneumatique de véhicule selon l'une quelconque des revendications 1 à 8, **caractérisé en ce que** les creux (9, 9') présentent un bord de délimitation (9a, 9'a) se trouvant plus proche de la périphérie de la bande de roulement, qui, considéré dans la direction radiale, présente par rapport à l'endroit le plus profond du fond de rainure (7c) une distance (a) de 2,00 mm à 4,00 mm, notamment jusqu'à 3,00 mm.

10. Pneumatique de véhicule selon l'une quelconque des revendications 1 à 9, **caractérisé en ce que** les creux (9) sont arrondis en section transversale.

11. Pneumatique de véhicule selon la revendication 10, **caractérisé en ce que** les creux (9) sont arrondis dans la section transversale en forme de demi-cercle ou de manière similaire à un demi-cercle.

12. Pneumatique de véhicule selon l'une quelconque des revendications 1 à 10, **caractérisé en ce que** les creux (9') sont en forme de quart de cercle ou de manière similaire à un quart de cercle dans la section transversale, leur arrondi se raccordant directement à un arrondi de transition vers le fond de rainure (7c).
